# EUROPEAN PATENT APPLICATION

(11) **EP 3 925 570 A1**
(43) Date of publication of application: **22.12.2021**
(21) Application number: 21190524.5
(22) Date of filing: 23.02.2018
(51) Int. Cl.: A61C 13/007, A61C 13/087, A61C 13/093, A61C 13/01, A61C 13/08, A61C 13/103, A61C 13/00, A61C 13/10

(54) **ARTIFICIAL TOOTH**

(30) Priority: 28.02.2017 JP 2017037173
(62) Divisional of application: 18761121.5
(71) Applicant: Mitsui Chemicals, Inc., Tokyo 105-7122 (JP)
(72) Inventor: Okumura, Maho, Chiba, 299-0265 (JP); Koiso, Ayumi, Chiba, 299-0265 (JP)
(74) Representative: Hoffmann Eitle

(57) **Abstract**

This invention provides an artificial tooth (200) comprising:
a basal surface (230), which is to be adhered to a socket (120) of a denture base (100), having a valley-shaped basal surface apex portion (238) interconnecting both ends of the artificial tooth (200) along a tooth row and is configured by a surface that is concave overall when an occlusal surface of the artificial tooth (200) is facing upward; and
each of a labial-side surface (204) and a lingual-side surface (206) being formed as a continuous surface whose lower end edge (208) is visible even after the artificial tooth (200) is attached to the socket (120).

## Description

### Technical Field

The present invention relates to a denture base and a method of manufacturing the same, an artificial tooth and a method of manufacturing the same, and a denture and a method of manufacturing the same.

### Background Art

In dentures made by conventional methods, in which a curable resin is poured into a gypsum mold configured from an upper mold and a lower mold and then the curable resin is cured (e.g., photopolymerized, thermopolymerized, etc.), artificial teeth have been embedded in and fixed to resin portions of a denture base (see JP 2008-289839 A and JP 3,064,138 U).

Furthermore, in dentures made by CAD/CAM, artificial teeth are fitted into, adhered to, and fixed to socket portions of a denture base cut by CAD/CAM (see JP 2014-155878 A).

### SUMMARY OF INVENTION

### Technical Problem

In both denture bases obtained by conventional methods and denture bases obtained by CAD/CAM, the artificial teeth are embedded in the denture base to fix the artificial teeth. Patients who require dentures have alveolar ridges of various different heights. Particularly in a denture for a patient with a high alveolar ridge, sometimes the thickness of the denture base cannot be sufficiently ensured in regard to the areas directly under the artificial teeth to achieve a balance between fitting feeling and occlusal feeling. However, if the thickness of the denture base is reduced, there is a concern that collar portions of the artificial teeth (i.e., the portions embedded in the denture base) will end up touching the alveolar ridge of the patient. Consequently, it has been necessary to cut the collar portions beforehand, resulting in a greater denture manufacturing burden.

In view of the above circumstances, it is an object of an embodiment of the present invention to provide a denture base whose manufacturing burden can be reduced, an artificial tooth embedded therein, and a denture equipped with these.

### Solution to Problem

The solution to the problem includes the following aspects.
<1> A denture base comprising:
   a base portion;
   a socket that is demarcated by a step portion from a gingival area of the base portion and to which an artificial tooth is to be attached; and
   interdental papilla areas of the gingival area, which are positioned at both ends of the socket along a tooth row and which correspond to interdental papillae between adjacent teeth,
   wherein, in a state in which the socket is facing upward:
      a basal surface of the socket has a ridge-shaped socket apex portion interconnecting the interdental papilla areas at both ends and is configured by a surface that is convex overall,
      a peripheral area of the basal surface is in mutually continuous abutment with the step portion, and
      the socket apex portion is positioned substantially as high as, or higher than, apex portions of the interdental papilla areas that are seen from a labial side in a state in which the artificial tooth is attached to the socket.
<2> The denture base according to <1>, wherein the basal surface at a labial surface side of the socket apex portion is formed in a convex shape that slopes downward toward the labial side.
<3> The denture base according to <2>, wherein the basal surface at a lingual surface side of the socket apex portion is also formed in a convex shape that slopes downward toward the lingual side.
<4> The denture base according to <3>, further comprising, in the basal surface, a protruding portion that projects upward from the socket apex portion.
<5> The denture base according to any one of <1> to <4>, wherein
   a plurality of sockets are formed adjacent to each other in the base portion, and
   a socket having the basal surface is at least one of the plurality of sockets.
<6> A method of manufacturing a denture base comprising a cutting step of cutting a denture base material to obtain the denture base according to any one of <1> to <5>.
<7> The method of manufacturing a denture base according to <6>, wherein the cutting step includes a step (a CAD/CAM step) of using a CAM system unit to form a design that has been designed by a CAD system unit.
<8> The method of manufacturing a denture base according to <7>, wherein the socket is formed in the CAD/CAM step.
<9> A method of manufacturing a denture base comprising a forming step of forming, by 3D printing, the denture base according to any one of <1> to <5>.
<10> An artificial tooth whose basal surface that is to be adhered to a socket of a denture base has a valley-shaped basal surface apex portion interconnecting both ends of the artificial tooth along a tooth row and is configured by a surface that is concave overall when an occlusal surface of the artificial tooth is facing upward,
   wherein each of a labial-side surface and a lingual-side surface of the artificial tooth is formed as a continuous surface whose lower end edge is visible even after the artificial tooth is attached to the socket.
<11> The artificial tooth according to <10>, wherein the basal surface at a labial surface side from the basal surface apex portion is formed in a concave shape that slopes downward toward the labial side.
<12> The artificial tooth according to <11>, wherein the basal surface at a lingual surface side from the basal surface apex portion is also formed in a concave shape that slopes downward toward the lingual side.
<13> The artificial tooth according to <12>, further comprising a recessed portion in a central portion of the basal surface apex portion.
<14> The artificial tooth according to <10>, wherein the basal surface is matable with the socket of the denture base according to <1> or <5> dependent from <1>.
<15> The artificial tooth according to <11>, wherein the basal surface is matable with the socket of the denture base according to <2> or <5> dependent from <2>.
<16> The artificial tooth according to <12>, wherein the basal surface is matable with the socket of the denture base according to <3> or <5> dependent from <3>.
<17> The artificial tooth according to <13>, wherein the basal surface is matable with the socket of the denture base according to <4> or <5> dependent from <4>.
<18> The artificial tooth according to any one of <10> to <17>, wherein the basal surface apex portion is visible from a lateral direction of the artificial tooth.
<19> A method of manufacturing an artificial tooth comprising a forming step of obtaining, by injection molding, the artificial tooth according to any one of <10> to <18>.
<20> A method of manufacturing an artificial tooth comprising a cutting step of cutting an artificial tooth material to obtain the artificial tooth according to any one of <10> to <18>.
<21> A method of manufacturing an artificial tooth comprising a forming step of forming, by 3D printing, the artificial tooth according to any one of <10> to <18>.
<22> A denture comprising the denture base according to <1> and the artificial tooth according to <10> attached to the socket of the denture base.

Furthermore, a denture comprising the denture base according to <2> and the artificial tooth according to <11> attached to the socket of the denture base.

Furthermore, a denture comprising the denture base according to <3> and the artificial tooth according to <12> attached to the socket of the denture base.

Furthermore, a denture comprising the denture base according to <4> and the artificial tooth according to <13> attached to the socket of the denture base.

<23> The denture according to <22>, wherein a plurality of sockets are formed adjacent to each other in the base portion, and artificial teeth that are attached to each of the sockets are interconnected.

<24> A method of manufacturing a denture comprising: a cutting step of cutting a denture base material to obtain the denture base according to <1>; and an attachment step of attaching the artificial tooth according to <10> to the socket of the denture base.

Furthermore, a method of manufacturing a denture comprising: a cutting step of cutting a denture base material to obtain the denture base according to <2>; and an attachment step of attaching the artificial tooth according to <11> to the socket of the denture base.

Furthermore, a method of manufacturing a denture comprising: a cutting step of cutting a denture base material to obtain the denture base according to <3>; and an attachment step of attaching the artificial tooth according to <12> to the socket of the denture base.

Furthermore, a method of manufacturing a denture comprising: a cutting step of cutting a denture base material to obtain the denture base according to <4>; and an attachment step of attaching the artificial tooth according to <13> to the socket of the denture base.

Moreover, any of these methods of manufacturing a denture base, wherein a plurality of sockets are formed adjacent to each other in the base portion, and a socket having the basal surface is at least one of the plurality of sockets.

<25> A method of manufacturing a denture comprising: a step of obtaining, by 3D printing, the denture base according to <1>; and an attachment step of attaching the artificial tooth according to <10> to the socket of the denture base.

Furthermore, a method of manufacturing a denture comprising: a step of obtaining, by 3D printing, the denture base according to <2>; and an attachment step of attaching the artificial tooth according to <11> to the socket of the denture base.

Furthermore, a method of manufacturing a denture comprising: a step of obtaining, by 3D printing, the denture base according to <3>; and an attachment step of attaching the artificial tooth according to <12> to the socket of the denture base.

Furthermore, a method of manufacturing a denture comprising: a step of obtaining, by 3D printing, the denture base according to <4>; and an attachment step of attaching the artificial tooth according to <13> to the socket of the denture base.

Moreover, any of these methods of manufacturing a denture base, wherein a plurality of sockets are formed adjacent to each other in the base portion, and a socket having the basal surface is at least one of the plurality of sockets.

### Advantageous Effects of Invention

An embodiment of the present invention is configured as described above, so there can be provided a denture base whose manufacturing burden can be reduced, an artificial tooth embedded therein, and a denture having these. Specifically, for example, the area where the artificial tooth is to be embedded in the denture base is small, so the step of cutting the artificial tooth can be significantly reduced or eliminated even in a denture for a patient with a high alveolar ridge. Furthermore, the area of adhesion to the artificial tooth is increased because the basal surface of the denture base has a convex shape, and the fixing force of the artificial tooth can be raised.

### BRIEF DESCRIPTION OF THE DRAWINGS

FIG. 1A is a perspective view showing a denture base of a first embodiment seen from the front side and a little above in a state in which sockets are facing upward.
FIG. 1B is a perspective view seen a little more from the right side with respect to FIG. 1A.
FIG. 2A is a perspective view (A) of part of the denture base of the first embodiment.
FIG. 2B is a sectional view along line II-II of FIG. 2A.
FIG. 2C is an example modification of FIG. 2B.
FIG. 2D is an example modification of FIG. 2B.
FIG. 2E is an example modification of FIG. 2B.
FIG. 3 is a front view schematically showing a state in which artificial teeth are attached to the sockets of the denture base of the first embodiment.
FIG. 4A is a front view of an artificial tooth of the first embodiment.
FIG. 4B is a side view (B) a little more toward the back side of the artificial tooth of the first embodiment.
FIG. 4C is a back view (C) a little more toward the side of the artificial tooth of the first embodiment.
FIG. 4D is a sectional view along line IV-IV of FIG. 4A.
FIG. 4E is an example modification of FIG. 4D.
FIG. 4F is an example modification of FIG. 4D.
FIG. 4G is an example modification of FIG. 4D.
FIG. 5 is a front view showing a state in which the artificial tooth has been attached to a socket of the denture base of the first embodiment.
FIG. 6 is a perspective view showing a denture of the first embodiment.
FIG. 7A is a sectional view along line VII-VII of FIG. 6.
FIG. 7B is a sectional view of a comparative example contrasted with FIG. 7A.
FIG. 8A is a front view of part of a denture base of a second embodiment.
FIG. 8B is a back-side perspective view of part of the denture base of the second embodiment.
FIG. 9A is a front view of an artificial tooth of the second embodiment.
FIG. 9B is a lower perspective view of the artificial tooth of the second embodiment.
FIG. 10 is a sectional view along line X-X of FIG. 8A and FIG. 9A showing a denture of the second embodiment.
FIG. 11A is a front view of part of a denture base of a third embodiment.
FIG. 11B is a back-side perspective view of part of the denture base of the third embodiment.
FIG. 12A is a front view of an artificial tooth of the third embodiment.
FIG. 12B is a lower perspective view of the artificial tooth of the third embodiment.
FIG. 13 is a sectional view along line XIII-XIII of FIG. 11A and FIG. 12A showing a denture of the third embodiment.
FIG. 14 is a perspective view showing a denture of a fourth embodiment.
FIG. 15A is a view showing heights of apex portions of interdental papilla areas 114 that are seen from a labial side in a state in which the artificial teeth are attached to the sockets.
FIG. 15B is a view showing heights of the apex portions of the interdental papilla areas 114 that are seen from the labial side in a state in which the artificial teeth are attached to the sockets.
FIG. 15C is a view showing heights of the apex portions of the interdental papilla areas 114 that are seen from the labial side in a state in which the artificial teeth are attached to the sockets.
FIG. 16 is a sectional view, corresponding to the sectional view (A) along line VII-VII of FIG. 6, showing an example modification of the first embodiment.

### DESCRIPTION OF EMBODIMENTS

Embodiments of the present invention will be described below with reference to the drawings. Throughout all the drawings referred to below, the same reference signs denote the same members.

### First Embodiment

### (Configuration of Denture)

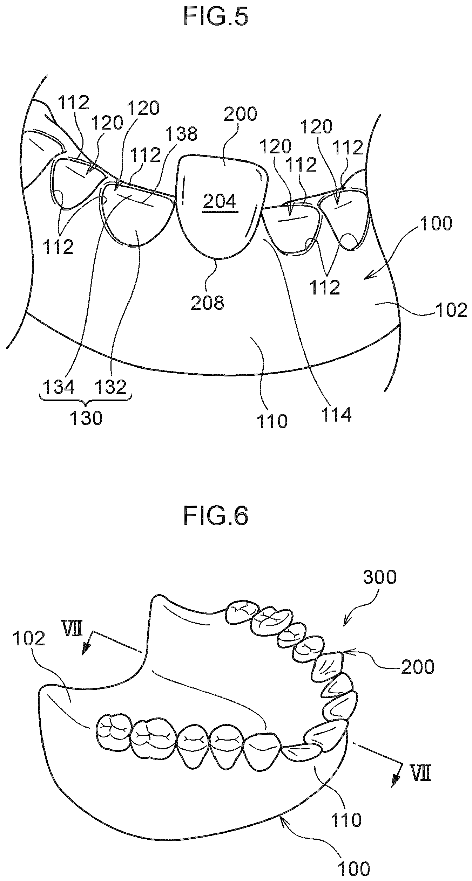

As shown in FIG. 6, a denture 300 pertaining to a first embodiment includes a denture base 100 and plural artificial teeth 200 attached to a base portion 102 of the denture base 100. Furthermore, the area of the base portion 102 that is seen as gingiva in a state in which the artificial teeth 200 are attached is referred to as a gingival area 110. Although FIG. 6 shows a denture 300 for a maxilla, the denture and the denture base may also be for a mandible.

### (Configuration of Denture Base)

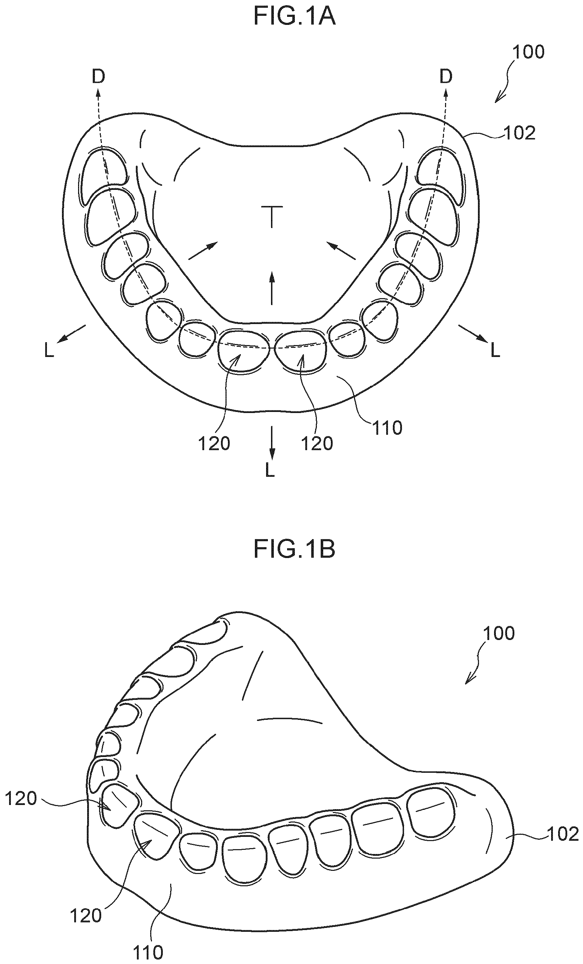

As shown in FIG. 1A and FIG. 1B, the denture base 100 has the base portion 102, which is the part to which the artificial teeth 200 are to be attached. In the base portion 102, a plurality of sockets 120 into which the artificial teeth 200 (see FIG. 6) are placed and fixed are formed adjacent to each other along a tooth row. The denture base 100 of FIG. 1A and FIG. 1B is shown in a state in which the sockets 120 are facing upward. The up and down direction and heights relating to the denture base 100 and referred to in the description below all follow the up and down direction and heights in the state shown in FIG. 1A and FIG. 1B. Furthermore, in FIG. 1A, the arrows indicated by the curved dashed line between D-D indicate a direction along the tooth row. Moreover, the direction of the arrows denoted by L represents a labial side or a buccal side, and the direction of the arrows denoted by T represents a lingual side. The expressions "direction along the tooth row," "labial side" (which, in the present invention, unless otherwise specified, is expressed in this way as a concept that also includes "buccal side"), and "lingual side" referred to in the description below are directions indicated respectively by these arrows in FIG. 1A. Directions are indicated by these arrows where appropriate also in the drawings below.

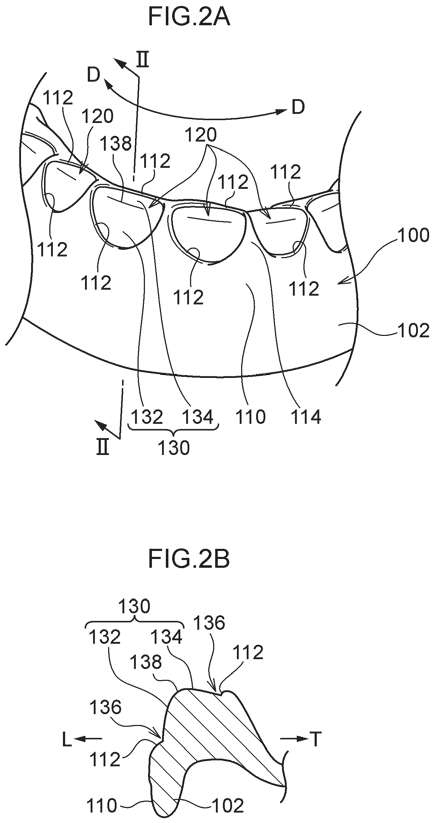

As shown in FIG. 2A, the sockets 120 are clearly demarcated by step portions 112 from the gingival area 110. In other words, the surfaces of the sockets 120 are lower by an amount corresponding to the height of the step portions 112 with respect to the gingival area 110.

Furthermore, interdental papilla areas 114, at which the gingival area 110 is higher by an amount corresponding to the height of the step portions 112, are formed on both ends of each of the sockets 120 along the tooth row. The interdental papilla areas 114 include areas that form interdental papillae between the artificial teeth 200 that are to be attached to the sockets 120 and adjacent teeth. What are here called adjacent "teeth" means adjacent artificial teeth 120, but if the denture 300 is a partial denture, there are also cases where the adjacent teeth are natural teeth to which the partial denture is adjacent.

Each of basal surfaces 130, which are surfaces of the sockets 120 to which the artificial teeth 200 are to be fixed, has a ridge shape interconnecting the interdental papilla areas 114 positioned on both ends of the corresponding socket 120. These ridge-shaped areas are referred to as socket apex portions 138. In other words, the socket apex portions 138 are the highest parts of the basal surfaces 130 of the sockets 120. The expression "ridge-shaped" in relation to the socket apex portions 138 refers to a state in which the sockets 120 are facing upward as in the drawings. Consequently, in a case where the denture base 100 has actually been inserted into the oral cavity as part of the denture 300, the "ridges" are in the lowest position in the case of a denture 300 for a maxilla and conversely are in the highest position in the case of a denture 300 for a mandible.

Each of the basal surfaces 130 of the sockets 120 is configured by a surface that is convex overall including the socket apex portion 138. Here, the expression "surface that is convex overall" means that basically the overall surface has a three-dimensional shape that is convex, and means that it is desirable for the overall surface to be formed as a convexly curved surface but that it is alright if the overall surface includes a flat surface in a part thereof or if the overall surface is formed in a convex shape by a combination of plural flat surfaces.

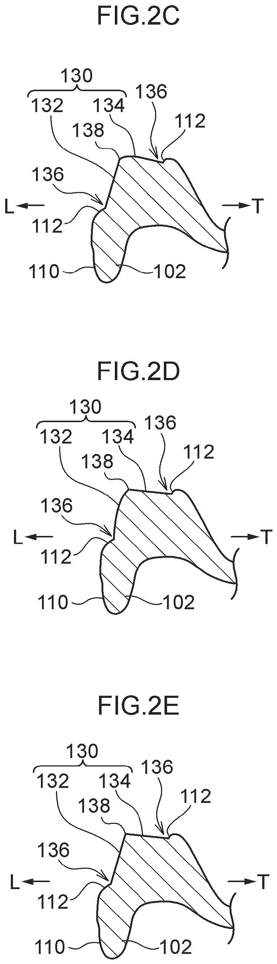

As shown in FIG. 2B, a basal surface 132 on the labial side of each socket 120 is formed in a convex shape that slopes downward toward the labial side. As shown in the example modification of FIG. 2C, the basal surface 132 on the labial side may also be formed as a flat surface. Furthermore, a basal surface 134 on the lingual side is also formed in a convex shape that slopes downward toward the lingual side. As shown in the example modification of FIG. 2D, the basal surface 134 on the lingual side may also be formed as a flat surface. Moreover, as shown in the example modification of FIG. 2E, as long as the basal surface 130 has a convex shape overall, both the basal surface 132 on the labial side and the basal surface 134 on the lingual side may also be formed as flat surfaces.

As shown in FIG. 2B, a peripheral area 136 of the basal surface 130 of each socket 120 is in mutually continuous abutment with the step portion 112 of the gingival area 110 on both the labial side and the lingual side. That is, the peripheral area 136 directly borders on the step portion 112, without a recessed structure such as a groove or a valley portion being interposed between the peripheral area 136 and the step portion 112. Furthermore, the step portion 112 also directly borders on the peripheral area 136, without a recessed structure such as a groove or a pocket being interposed between the step portion 112 and the peripheral area 136. This is what is expressed as "mutually continuous abutment" as described above.

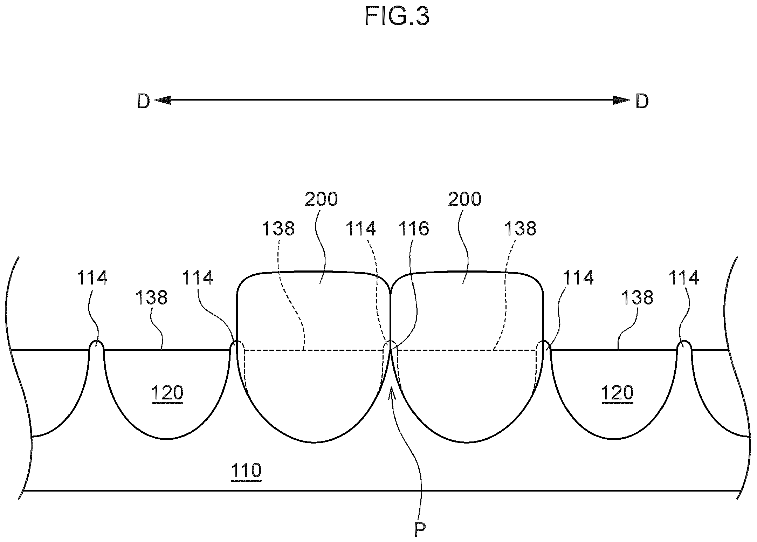

Here, FIG. 3 schematically shows, in a front view, a state in which the artificial teeth 200 are attached to some of the sockets 120. As shown in this drawing, the interdental papilla areas 114 of the gingival area 110 are a little higher, by an amount corresponding to the step portion 112, than the height of the socket apex portions 138. However, when two artificial teeth 200 that are adjacent to each other are attached, this area is hidden between the teeth and cannot be seen from the labial side. The height of an apex portion 116, which is the highest part of the area (i.e., an interdental papilla P in the drawing) that can be seen from the labial side in the interdental papilla area 114 positioned between the two artificial teeth 200 that are adjacent to each other, is substantially the same as the height of the socket apex portions 138. Here, that the height of the socket apex portions 138 and the height of the apex portions 116 of the interdental papilla areas 114 are substantially the same means that it suffices to be able to perceive both heights as being the same at a glance, and this does not require that the heights be strictly the same. Thus, it is alright if there are cases where, in reality, either one is slightly higher than the other.

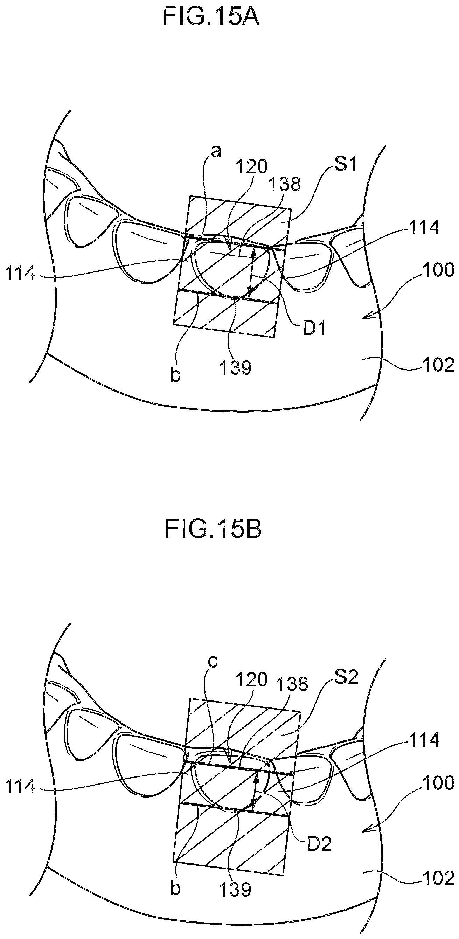

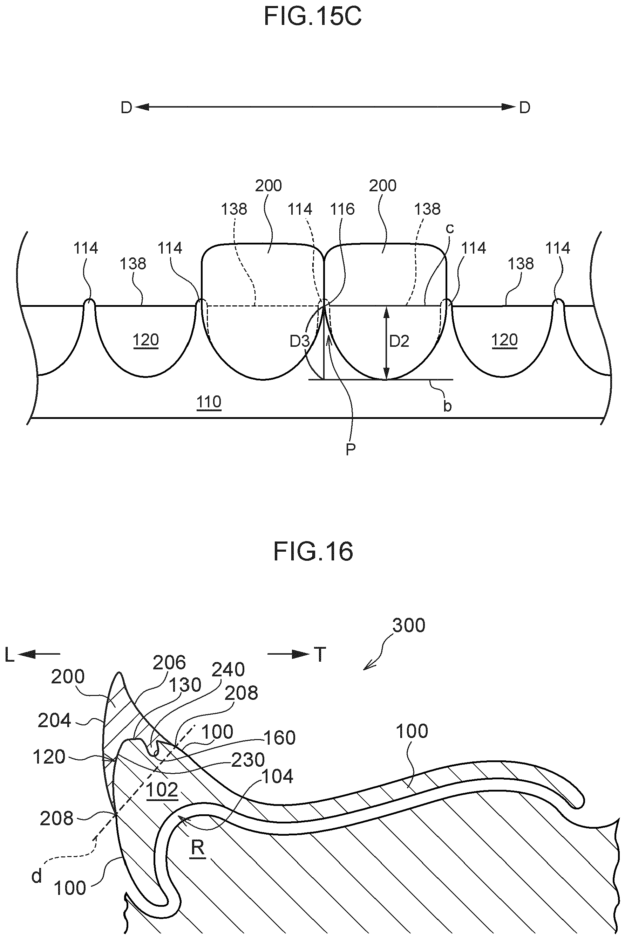

The height of the apex portions 116 of the interdental papilla areas 114 that are seen from the labial side in a state in which the artificial teeth 200 are attached to the sockets 120 will be specifically described using FIG. 15A, FIG. 15B, and FIG. 15C.

In FIG. 15A, straight line a is a straight line that passes through the highest points of adjacent interdental papilla areas 114. Straight line b is a straight line that passes through a socket lower end portion 139 and is parallel to straight line a. Plane S1 is a plane that passes through straight line a and straight line b that are adjacent to each other. Moreover, distance D1 is the distance between straight line a and straight line b.

In FIG. 15B, straight line c is a straight line that is parallel to straight line b and passes through the socket apex portion 138. Furthermore, plane S2 is a plane that passes through straight line b and straight line c. Moreover, distance D2 is the distance between straight line b and straight line c. Plane S1 and plane S2 are not invariably limited to being in the same plane.

That the height of the socket apex portions 138 and the height of the apex portions 116 of the interdental papilla areas 114 that are seen from the labial side in a state in which the artificial teeth are attached to the sockets are the same means that, in FIG. 15C, distance D3 from straight line b to the apex portions 116 of the interdental papilla areas 114 is substantially the same as the distance D2. In other words, referring to the distance D1 and the distance D2, it can be defined that the distance D3 is substantially the same as the distance D2 in a case where D1:D2 is 1:1.2 to 1:08, preferably a case where D1:D2 is 1:1.1 to 1:0.9, and more preferably a case where D1:D2 is 1:1 to 1:0.95.

Although in the present embodiment a case is described where the socket apex portions 138 are substantially the same height as the apex portions 116 of the interdental papilla areas 114 that are seen from the labial side in a state in which the artificial teeth are attached to the sockets 120, the socket apex portions 138 may also be in a higher position than the apex portions 116 of the interdental papilla areas 114, that is, in a position where D3<D2 in FIG. 15C.

Furthermore, as for the shape of the sockets of the denture base 100, all the sockets may be formed as sockets having the socket apex portion 138 and having the basal surface 130 configured by a surface that is convex overall such as shown in FIG. 1A and FIG. 1B and also FIG. 2A to FIG. 2E, or sockets having the basal surface 130 may also be mixed with sockets having the conventional concave shape. Examples where sockets of different shapes are mixed together include using sockets having the basal surface 130 for anterior teeth and using sockets with the conventional concave shape for posterior teeth.

### (Denture Base Material)

The material of the denture base 100 serving as the denture base material is not particularly limited. However, acrylic resin is preferred because it is suited for manufacture using a CAD/CAM system (a manufacturing system equipped with a CAD (Computer Aided Design) system unit and a CAM (Computer Aided Manufacturing) system unit) as described later and because it has excellent adhesion to resin teeth made of commercially available acrylic resin.

Here, the acrylic resin is a polymer including at least one type selected from a group comprising a structural unit derived from acrylic acid, a structural unit derived from methacrylic acid, a structural unit derived from esters of acrylic acid, and a structural unit derived from esters of methacrylic acid.

That is, the acrylic resin in the present specification is a polymer obtained by polymerizing a monomer component including at least one type (hereinafter also referred to as an "acrylic monomer") selected from a group comprising acrylic acid, methacrylic acid, esters of acrylic acid, and esters of methacrylic acid.

The acrylic monomer that is at least a part of the raw material of the acrylic resin may be a monofunctional acrylic monomer or may be a polyfunctional acrylic monomer.

Examples of monofunctional acrylic monomers include acrylic acid, methacrylic acid, esters of acrylic acid including at least one acryloyl group in one molecule, and esters of methacrylic acid including at least one methacryloyl group in one molecule.

Examples of polyfunctional acrylic monomers include esters of acrylic acid including two or more acryloyl groups in one molecule and esters of methacrylic acid including two or more methacryloyl groups in one molecule.

As the esters of acrylic acid, alkyl esters of acrylic acid are preferred. Among them, alkyl esters of acrylic acid in which a carbon number of the alkyl group included in the site of the alkyl ester is 1 to 4 are more preferred, methyl acrylate and ethyl acrylate are even more preferred, and methyl acrylate is particularly preferred.

As the esters of methacrylic acid, alkyl esters of methacrylic acid are preferred. Among them, alkyl esters of methacrylic acid in which a carbon number of the alkyl group included in the site of the alkyl ester is 1 to 4 are preferred, methyl methacrylate and ethyl methacrylate are more preferred, and methyl methacrylate is particularly preferred.

Furthermore, it is preferred that the acrylic resin is a polymer obtained by polymerizing a monomer component including a monofunctional acrylic monomer from a viewpoint of reactivity and productivity.

It is more preferred that the acrylic resin is a polymer obtained by polymerizing a monomer component including 50 mass% or more (preferably 80 mass% or more, more preferably 90 mass% or more, and even more preferably 95 mass% or more) of a monofunctional acrylic monomer.

As the acrylic resin, particularly preferred is a polymer including a structural unit derived from methyl methacrylate, and most preferred is a homopolymer of methyl methacrylate (polymethyl methacrylate (PMMA)).

The acrylic resin may also include rubber from the viewpoint of impact resistance.

Examples of types of the rubber include acrylic rubber, butadiene rubber, butadiene-acrylic rubber, butadiene-styrene rubber, and silicone rubber.

In a case where the acrylic resin includes rubber, it suffices to select the rubber type in consideration of appropriate physical properties, but butadiene rubber or butadiene-acrylic rubber is preferred in consideration of a balance in physical properties such as hardness and impact resistance.

The denture base 100 may be colored to a color tone close to that of gingiva from an aesthetic viewpoint. It suffices to use a pigment, dye, or coloring matter, for example, to color the denture base 100.

The denture base 100 may be a denture base for a complete denture or may be a denture base for a partial denture.

Furthermore, the denture base 100 may be a denture base for a maxillary denture, or may be a denture base for a mandibular denture, or may be a set of a maxillary denture and a mandibular denture.

### (Method of Manufacturing Denture Base)

Next, a method of manufacturing the denture base 100 will be described.

In the manufacture of the denture base 100, as an example, a CAD/CAM system can be used. The manufacturing step resulting from the CAD/CAM system is referred to as a "CAD/CAM step."

The CAD system unit designs and creates, on the basis of 3D surface profile information of an oral cavity and 3D profile information of artificial teeth 200, profile information of the denture base 100 as digital data using a computer. In the present embodiment, the digital data also includes profile information of the sockets 120.

The CAM system unit has, for example, a milling machine. The CAM system unit acquires the profile information that has been formed by the CAD system unit and forms, with the milling machine, the denture base 100. That is, the milling machine cuts, on the basis of the profile data of the denture base 100 that has been input, a resin block formed of the denture base material, whereby the denture base 100 is obtained.

In this way, in the method of manufacturing the denture base of the present embodiment, at least a part of the step of forming the denture base 100 includes a cutting step (e.g., cutting by the milling machine described above). Thereby, a step of forming the sockets 120 by hand, for example, can be eliminated, or modification of the shape of the sockets 120 by hand, for example, can be minimized.

In particular, by forming the sockets 120 by cutting, the sockets 120 can be formed with a high degree of precision.

In the system for manufacturing the denture base 100, the profile information of the denture base 100 that has been obtained by the CAD system unit is included. On the basis of this profile data, the CAM unit forms the material of the denture base 100 to manufacture the denture base 100. Thereby, the denture base 100 with the desired shape can be formed efficiently and with a high degree of precision.

In particular, in the present embodiment, the profile information of the denture base 100 also includes the profile information of the sockets 120. Consequently, the denture base 100 having the sockets 120 may also be formed only by the CAD/CAM step using the milling machine.

Note that a manual work by a worker may be included as a part of the cutting step.

Furthermore, in the manufacture of the denture base 100, a manufacturing system having a 3D printer may also be used instead of the milling machine of the manufacturing system described above. In this kind of manufacturing system, the CAM system unit acquires the profile information that has been formed by the CAD system unit, and the denture base 100 is formed by 3D printing using the 3D printer that is a part of the CAM system unit. The 3D printer forms the denture base 100 by layering the denture base material one layer at a time on the basis of the profile data of the denture base 100 that has been input. The 3D printer may employ any of stereolithography, selective laser sintering, fused deposition modeling, and inkjet printing.

In particular, in the present embodiment, the profile information of the denture base 100 also includes the profile information of the sockets 120. Consequently, for example, the denture base 100 having the sockets 120 may also be formed only by the CAD/CAM step using the 3D printer.

In this way, in the step of forming the denture base 100 by 3D printing, the denture base 100, including also the shape of the sockets 120, can be formed only with the 3D printer. Thereby, a step of forming the sockets 120 by hand, for example, can be eliminated, or modification of the shape of the sockets 120 by hand, for example, can be minimized.

As the system for manufacturing the denture base 100, it suffices for the CAM unit to have at least one of a milling machine and a 3D printer, and the CAM unit may also have both.

### (Configuration of Artificial Tooth)

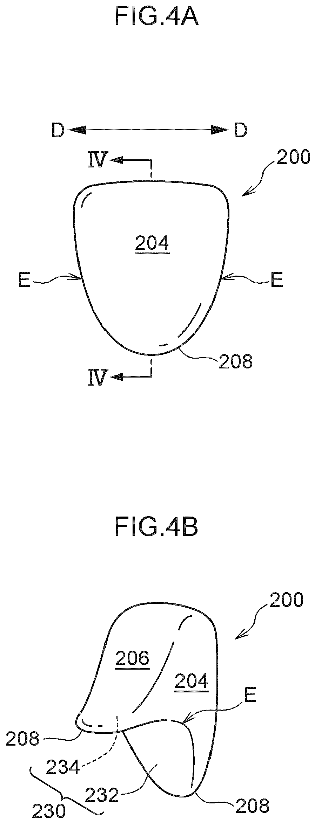

As shown in FIG. 4B to FIG. 4D, the artificial tooth 200 has a basal surface 230 of the artificial tooth 200 that serves as a surface that is to be adhered to the basal surface 130 of the socket 120 of the denture base 100. The artificial tooth 200 of FIG. 4A to FIG. 4D is to be attached to the denture base 100 shown in FIG. 1A and FIG. 1B and is shown in a state in which its occlusal surface is facing upward. That is, the up and down direction of the artificial tooth 200 of FIG. 4A to FIG. 4D is the same as the up and down direction of the denture base 100 of FIG. 1A and FIG. 1B. The up and down direction and heights relating to the artificial tooth 200 and referred to in the following description all mean the up and down direction and heights in the state shown in FIG. 4A to FIG. 4D.

The basal surface 230 of the artificial tooth 200 is configured by a surface that is concave overall so as to correspond to the basal surface 130 of the corresponding socket 120. Here, the expression "surface that is concave overall" means that basically the overall surface has a three-dimensional shape that is concave, and means that it is desirable for the overall surface to be formed as a concavely curved surface, but in a case where part or all of the basal surface 130 of the socket 120 is formed by a flat surface, as long as the overall surface is formed in a concave shape, the basal surface 230 may also be configured by a flat surface as a part corresponding to that flat surface.

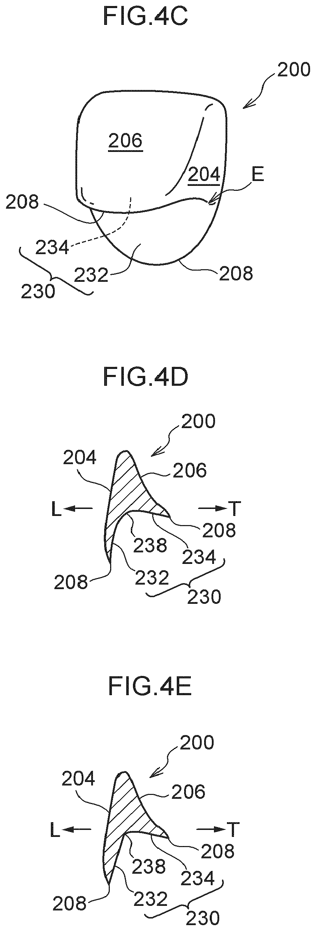

The area - corresponding to the socket apex portion 138 - of the basal surface 230 of the artificial tooth 200 configured as a surface that is concave overall is in the highest position, and this area is referred to as a basal surface apex portion 238 (see FIG. 4D). The basal surface apex portion 238 is valley-shaped and interconnects both ends E (see FIG. 4A to FIG. 4C) of the artificial tooth 200 along the tooth row. Here, "both ends" means the sides that have adjacent teeth (regardless of whether they are artificial teeth or natural teeth). What is here called "valley-shaped" means a shape like a "valley" in a case assuming that the basal surface 230 of the artificial tooth 200 is facing upward. Consequently, in a case where the artificial tooth 200 is actually inserted into an oral cavity as a part of the denture 300, this "valley" is in the lowest position in the case of a denture 300 for the maxilla and conversely is in the highest position in the case of a denture 300 for the mandible.

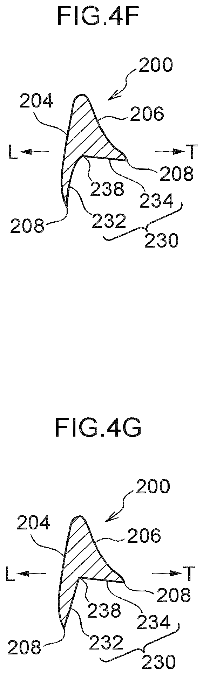

As shown in FIG. 4D, a basal surface 232 on the labial side of the artificial tooth 200 is formed in a concave shape that continuously slopes downward toward the labial side. Furthermore, a basal surface 234 on the lingual side is also formed in a concave shape that continuously slopes downward toward the lingual side. That is, the peripheral area 136 of the basal surface 130 of the socket 120 of the denture base 100 to which the artificial tooth 200 is to be attached is in continuous abutment with the step portion 112 of the gingival area 110 both on the labial side and the lingual side as described above (see FIG. 2B). Thus, in correspondence to the "continuous" shape of the peripheral area 136 of the basal surface 130 of the socket 120, the basal surface 230 of the artificial tooth 200 likewise also has a "continuous" shape, that is, does not have a projecting structure such as a protrusion or a ridge. As shown in FIG. 4E, the basal surface 232 on the labial side may also be formed as a flat surface in correspondence to the shape of the basal surface 132 on the labial side of the socket 120 shown in FIG. 2C. Furthermore, as shown in FIG. 4F, the basal surface 234 on the lingual side may also be formed as a flat surface in correspondence to the shape of the basal surface 134 on the lingual side of the socket 120 shown in FIG. 2D. Moreover, as shown in FIG. 4G, the basal surface 232 on the labial side and the basal surface 234 on the lingual side may also both be formed as flat surfaces in respective correspondence to the shapes of the basal surface 132 on the labial side and the basal surface 134 on the lingual side of the socket 120 shown in FIG. 2E.

Each of a labial-side surface 204 (see FIG. 4A and FIG. 4D) and a lingual-side surface 206 (see FIG. 4B, FIG. 4C, and FIG. 4D) of the artificial tooth 200 is formed as a continuous surface to their lower end edge 208. What is here called a "continuous surface" means that a step portion such as a so-called collar portion, which is an area of the conventional artificial tooth that is to be embedded in the denture base, is not formed in the lower end edges 208. Thus, the lower end edge 208 of each of the labial-side surface 204 and the lingual-side surface 206 of the artificial tooth 200 is visible even after the artificial tooth 200 is attached to the denture base 100 (see FIG. 5).

In the present embodiment, when the plurality of artificial teeth 200 are to be disposed in the sockets 120 formed adjacent to each other in the base portion 102 of the denture base 100, these adjacent artificial teeth 200 may also be connected to each other. Specifically, for example, in the case of disposing the artificial teeth 200 in the denture base 100 as in FIG. 3, the artificial teeth 200 may be connected to each other at the areas where the artificial teeth 200 touch each other.

In the present embodiment, it is preferred that the artificial tooth 200 be configured so that the basal surface apex portion 238 is visible from lateral directions of the artificial tooth. For example, as shown in FIG. 4B and FIG. 4C, in a case where the artificial tooth 200 is seen from its lateral directions, the space occupied by a line tangential to the basal surface apex portion 238 from one side surface side to the other side surface side runs clear through, so the basal surface apex portion 238 (see FIG. 4D) is visible from the lateral directions.

### (Material of Artificial Tooth)

The material used for the artificial tooth 200 is appropriately selected from resin material normally used as dental material such as, for example, ceramic material such as feldspar, quartz, silica, alumina, and zirconia, or composite resins that include polymethyl methacrylate (PMMA) or dimethacrylate as a matrix resin and also include an inorganic filler, and acrylic resin. Examples of dimethacrylate include bisphenol A-glycidyl methacrylate (Bis-GMA), triethylene glycol dimethacrylate (TEGDMA), and urethane dimethacrylate (UDMA).

In order to improve the aesthetic quality of the artificial tooth 200, materials with different color tones of two or more colors for the enamel layer and the dentin layer may also be used, separated into plural layers, and layered. Furthermore, two different materials that have different color tones may be prepared and combined, or materials that are the same but have different color tones may also be prepared and used.

Examples of the artificial tooth 200 include an acrylic resin tooth, an acrylic hard resin tooth, and ceramic tooth. Here, an acrylic resin tooth and hard resin tooth are preferred from the viewpoint of strengthening adhesion to the denture base 100.

As for the method of forming the artificial tooth 200, the artificial tooth 200 may be formed by compression molding, injection molding, or injection press molding, or may be cut and formed by CAD/CAM, for example, from a block of the artificial tooth material, or may be layered and formed by a 3D printer, for example.

### (Attachment of Artificial Tooth to Denture Base)

As shown in FIG. 5, the artificial tooth 200 is fixed and attached to the denture base 100 so as to cover the basal surface 130 of the socket 120. At this time, because the labial-side surface 204 of the artificial tooth 200 is formed as a continuous surface as mentioned above, the lower end edge 208 thereof is not embedded in the gingival area 110 and is visible from the outside in a state in which it is flush with the gingival area 110. The same is also true of the lingual-side surface 206 not shown in the drawing.

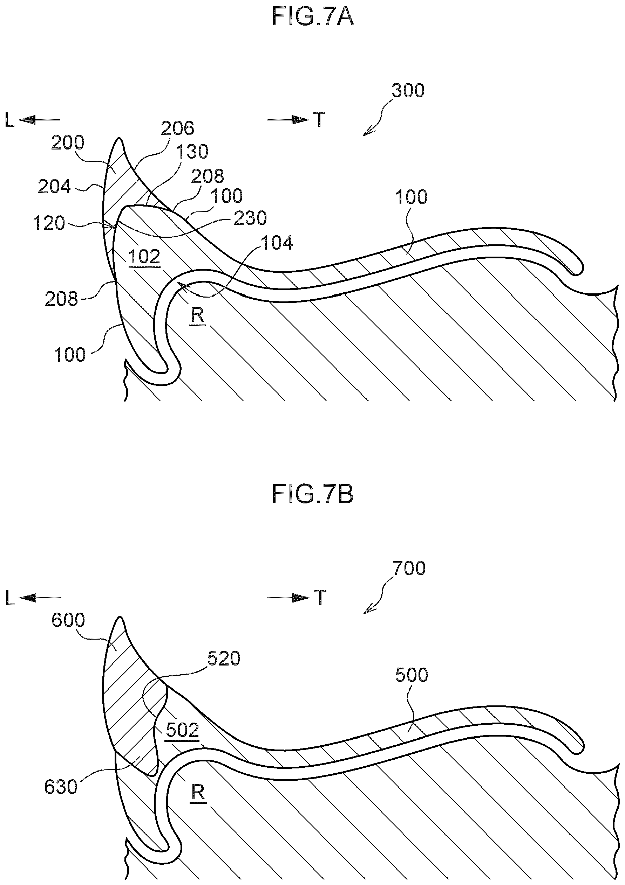

Specifically, the denture base 100 can be obtained by a cutting step of cutting the denture base material as described above or by a 3D printing step as described above. All the artificial teeth 200 are fixedly attached by an attachment step of attaching the artificial teeth 200 to the sockets 120 of the denture base 100, whereby the denture 300 shown in FIG. 6 is manufactured. In the denture 300, as shown in the sectional view of FIG. 7A, the basal surfaces 230 of the artificial teeth 200 are fixed to the basal surfaces 130 of the sockets 120 and are attached in a state in which the alveolar ridge R of the maxilla is made to fit into a concave portion 104 of the base portion 102 of the denture base 100. As mentioned above, the lower end edges 208 of both the labial-side surfaces 204 and the lingual-side surfaces 206 of the artificial teeth 200 are not embedded in the gingival area 110 and are visible from the outside.

Here, when sockets 520 are recessed as in a conventional example as in a denture 700 of a comparative example shown in FIG. 7B, it is apparent that a base portion 502 of a denture base 500 must be reduced in thickness by that amount. Thus, in a case where, depending on the patient, the alveolar ridge R is high, in order to ensure that root portions 630 of artificial teeth 600 do not abut the alveolar ridge R, it is necessary to make the base portion 502 thicker and cut by that amount the root portions 630 where the artificial teeth 600 are to be fixed to the sockets 520. Thereby, there is also the concern that the fixing degree between the artificial teeth 600 and the sockets 520 may become insufficient.

In contrast, in the present embodiment, as is also apparent from FIG. 7A, each of the sockets 120 is formed in a convex shape and the artificial teeth 200 are placed on and fixed to the sockets 120, so even when the alveolar ridge R is high, it is not necessary to cut the areas where the artificial teeth 200 are to be fixed to the sockets 120.

Thereby, according to the present embodiment, there can be provided a denture base whose manufacturing burden can be reduced, an artificial tooth embedded therein, and a denture equipped with these. For example, as mentioned above, the thickness of the denture base does not need to be reduced and collar portions of the artificial teeth do not need to be cut beforehand. More specifically, for example, according to the present embodiment, the areas where the artificial teeth are to be embedded in the denture base are small, so the step of cutting the artificial teeth even in a denture for a patient with a high alveolar ridge can be significantly reduced or eliminated. Furthermore, the area of adhesion to the artificial teeth is increased because each of the basal surfaces of the denture base has a convex shape, and the fixing force of the artificial teeth can be raised.

The attachment step is also a step of adhering the artificial teeth 200 to the denture base 100, that is, an adhesion step. As the adhesive (resin) for adhering the artificial teeth 200 to the denture base 100, for example, acrylic resin can be used. The acrylic resin is not particularly limited as long as it is capable of principal adhesion between the denture base 100 and the artificial teeth 200, and commercially available products may be used. That is, it is preferred that the adhesion step be a step (hereinafter referred to as a "principal adhesion step") of principally adhering the artificial teeth 200 to the denture base 100 using acrylic resin. What is here called principal adhesion between the denture base 100 and the artificial teeth 200 means that the artificial teeth 200 are fixedly attached to the denture base 100 to an extent that the denture base 100 and the artificial teeth 200 are capable of being used as the denture 300.

Examples of the acrylic resin used in the principal adhesion step include resin that is polymerized at a normal temperature (0 °C to 35 °C), resin that is polymerized by heat, and resin that is polymerized by light. Examples of the resin that is polymerized at a normal temperature (0 °C to 35 °C) or the resin that is polymerized by heat include acrylic resin whose polymerization progresses at a relatively low temperature (0 °C to 70 °C) and acrylic resin whose polymerization progresses at 70 °C or higher. Hereinafter, acrylic resin whose polymerization progresses at a relatively low temperature (preferably 0 °C to 70 °C) is referred to as "specific acrylic resin."

As the acrylic resin, an acrylic resin comprising a mixture of a polymer powder and a monomer solution may be used. When injecting the acrylic resin into the interstices between the sockets 120 and the artificial teeth 200, injection is easy if the acrylic resin is in a low-viscosity state just after mixing. Examples of the polymer powder include acrylic resin such as polymethyl methacrylate, and examples of the monomer solution include esters of methacrylic acid such as methyl methacrylate and ethyl methacrylate. Furthermore, the acrylic resin may also include other components such as, for example, a diffusion-promoting monomer such as 4-META (4-methacryloxyethyl trimellitate anhydride), a normal-temperature polymerization initiator (or a thermal polymerization initiator) such as TBB (tri-n-butylborane), a polymerization inhibitor, and a colorant.

Furthermore, examples of commercially available acrylic resin include ACRON (manufactured by GC Corporation), PalaXpress ultra (manufactured by Heraeus Kulzer), and Re-fine Bright manufactured by Yamahachi Dental Mfg., Co.

The adhesion step may also include a step (hereinafter also referred to as a "preliminary adhesion step") of preliminarily adhering the artificial teeth 200 to the denture base 100. What is here called preliminary adhesion means attaching the artificial teeth to the denture base to the extent that the positional relationship between the artificial teeth 200 and the denture base 100 is maintained, and being able to modify the positional relationship or easily cancel the state of adhesion as needed.

Examples of methods of preliminary adhering the artificial teeth 200 to the denture base 100 include a method where dental composite resin or acrylic resin is used, the resin (dental composite resin or acrylic resin) is injected into the interstices between the artificial teeth 200 and at least some of the sockets 120, and the injected resin is polymerized at a normal temperature (0 °C to 35 °C), polymerized by heat, or polymerized by light (e.g., visible light).

Examples of the resin used in the preliminary adhesion step include dental composite resin or acrylic resin. Examples of the acrylic resin used in the preliminary adhesion step include the same examples as those for the acrylic resin used in the principal adhesion step, but among them the specific acrylic resin (acrylic resin whose polymerization progresses at a relatively low temperature (preferably 0 °C to 70 °C)) is preferred. The dental composite resin will be described later.

When the adhesion step has the preliminary adhesion step, in a case where there are artificial teeth 200 for which it is necessary to modify the arrangement or adjust the shape of the artificial teeth 200 before polymerization of the resin used in the preliminary adhesion progresses (e.g., before photocuring ends in the case of a photocurable resin), removal of those artificial teeth 200, for example, can be performed.

Furthermore, it is preferred that the preliminary adhesion step be a step of preliminarily adhering the artificial teeth 200 to at least some of the sockets 120 of the denture base 100 from the viewpoint of more appropriately adjusting the amount of resin used in the principal adhesion.

The dental composite resin is not particularly limited as long as it can preliminarily adhere the artificial teeth 200 and the denture base 100 to each other; for example, a composite resin (restorative material) such as a mold restorative material, a crown prosthesis material, or a dental filler, or a self-adhesive cement can be used.

The composite resin may include, for example, dimethacrylate as a matrix resin and also include an inorganic filler, a silane coupling agent, and so forth. Examples of dimethacrylate include bisphenol A-glycidyl methacrylate (Bis-GMA), triethylene glycol dimethacrylate (TEGDMA), and urethane dimethacrylate (UDMA).

The self-adhesive cement may include polymethyl methacrylate (PMMA) or the aforementioned dimethacrylate as a matrix resin and may also include an adhesive substance, a filler, and so forth.

Furthermore, examples of the composite resin include flowable types that have a low viscosity and a low elasticity and paste types that have a high viscosity and a high elasticity, but in view of the fact that each of the sockets 120 of the denture base 100 is configured by a surface that is convex overall, paste types that have a certain viscosity and elasticity are preferred.

Furthermore, using a photopolymerizable composite resin is preferred because it more appropriately enables positional adjustment of the artificial teeth 200. By using a photopolymerizable composite resin, the composite resin that has been injected into the socket portions of the denture base is not cured before being exposed to light, so handling is excellent and it is easy to perform positional adjustment of the artificial teeth with good precision. Furthermore, by using a photopolymerizable composite resin, the adhesive strength of the adhesion (preliminary adhesion) after curing is relatively weak, so the artificial teeth 200 can be easily removed from the denture base 100, and after the artificial teeth 200 are removed it is easy to apply the composite resin to the sockets 120 of the denture base 100 and re-adhere (preliminarily adhere) the artificial teeth 200 to the denture base 100. Thereby, in a case where the shade (color tone) of the artificial teeth 200 is wrong or in a case where the positions of the artificial teeth 200 are misaligned during the curing, the artificial teeth 200 can be easily removed from the denture base 100 even after curing, so it is easy to perform positional adjustment by re-adhering (preliminarily adhering) the artificial teeth 200.

The photopolymerizable composite resin may include, for example, a polymerizable compound such as an ester of acrylic acid or an ester of methacrylic acid, an inorganic filler, and a photopolymerization initiator, and may further include a polymerization accelerator.

Furthermore, examples of commercially available composite resin include Beautifil II (manufactured by Shofu Inc.) and Revotek (manufactured by GC Corporation).

Before attaching the artificial teeth 200 to the denture base 100 with the adhesive in the attachment step (adhesion step), the artificial teeth 200 may also be temporarily fixed to the denture base 100 using a temporary fixing material. This temporary fixing also temporarily fixes the artificial teeth 200 to the denture base 100 to the extent that the positional relationship between the artificial teeth 200 and the denture base 100 is maintained. After the temporary fixing, the principal adhesion may be performed, without the preliminary adhesion being performed, as the attachment step.

In the case of using a temporary fixing material, an adhesive material that deforms at 25 °C (normal temperature), for example, can be used as the temporary fixing material. Examples of the adhesive material include resin such as urethane resins, acrylic resins, silicone resins, vinyl chloride resins, vinyl alcohol resins, vinyl alkyl ether resins, or acrylamide resins, and rubber such as natural rubber, silicone rubber, or styrene-butadiene copolymer elastomer. Moreover, putty (e.g., model putty, dental putty), tack label, wheat flour clay, and adhesive metal foil tape, for example, may also be used as the adhesive material.

Putty is a material used to fill depressions, cracks, and holes. Putty usually includes a pigment, a resin (a non-volatile vehicle), and a volatile substance.

Examples of putty include one-component (one-part) or multi-component (two-part, etc.) putty such as epoxy putty, polyester putty, silicone putty, or a modified putty of these, lacquer putty, instant adhesive putty, gypsum putty, calcium carbonate putty, or photocurable putty.

Tack label is a label where an adhesive material is provided on the back side of a base material, and is used by disposing the side with the adhesive material on the place to be temporarily fixed (e.g., near the boundary between the tooth crown and the tooth root).

The material for the base material is not particularly limited. Examples of the pressure-sensitive adhesive material provided on the back side of the base material include the above-mentioned resins and the above-mentioned rubbers.

Furthermore, as the metal foil tape, known adhesive metal foil tapes can be used.

Among the adhesive materials, from the perspective of little residual sticking to the denture 300 after removal of the temporary fixing material, putty is preferred, dental putty is more preferred, and dental silicone putty is even more preferred. In particular, when dental putty (preferably dental silicone putty) is used, there is little reversion during deformation, so positional adjustment of the artificial teeth 200 can be easily performed. Furthermore, the positional relationship between the artificial teeth 200 and the denture base 100 during temporary fixing is easily maintained.

For the pressure-sensitive adhesive material, one type may be used by itself or two or more types may be used in combination.

The shape of the temporary fixing material is not particularly limited as long as it is a shape by which the artificial teeth 200 can be temporarily fixed to the denture base, and a variety of shapes can be employed.

In the present embodiment, as shown in FIG. 7A, the basal surface 130 of the socket 120 of the denture base 100 is configured by a surface that is convex overall, and the basal surface 230 of the artificial tooth 200 is configured as a surface that is concave overall, but as shown in FIG. 16, there may also be a recessed portion 160 in part of the basal surface 130 of the socket 120, and there may also be a projecting portion 240 corresponding to this in part of the basal surface 230 of the artificial tooth 200.

That is, in the present disclosure, the "surface that is convex overall" in relation to the basal surface 130 of the socket 120 also includes a surface where there is a concave shape such as the recessed portion 160 in part of the basal surface 130 of the socket 120 as shown in FIG. 16. Furthermore, the "surface that is concave overall" in relation to the basal surface 230 of the artificial tooth 200 also includes a surface where there is a convex shape such as the projecting portion 240 in part of the basal surface 230 of the artificial tooth 200 as shown in FIG. 16.

However, as shown in FIG. 16, the projecting portion 240 that forms parts of the basal surface 230 of the artificial tooth 200 is configured as a protrusion that is hidden from both the labial-side surface 204 and the lingual-side surface 206 of the artificial tooth 200. Furthermore, as shown in FIG. 16, the recessed portion 160 that forms part of the basal surface 130 of the socket 120 of the denture base 100 is configured as a recess with which the projecting portion 240 that forms part of the basal surface 230 of the artificial tooth 200 mates.

In other words, the projecting portion 240 of the artificial tooth 200 has a size that does not extend beyond straight line d that passes through the lower end edge 208 of the labial-side surface 204 and the lower end edge 208 of the lingual-side surface 206 of the artificial tooth 200 when the artificial tooth 200 is attached to the denture base 100. Likewise, the recessed portion 160 of the basal surface 130 of the socket 120 has a size that does not extend beyond straight line d that passes through the lower end edge 208 of the labial-side surface 204 and the lower end edge 208 of the lingual-side surface 206 of the artificial tooth 200 when the artificial tooth 200 is attached to the denture base 100.

Two or more of the recessed portions 160 may also be provided in the basal surface 130 of the socket 120, and two or more of the projecting portions 240 may also be provided in the basal surface 230 of the artificial tooth 200. However, as described above, all the recessed portions 160 and all the projecting portions 240 have a size that does not extend beyond straight line d that passes through the lower end edge 208 of the labial-side surface 204 and the lower end edge 208 of the lingual-side surface 206 of the artificial tooth 200 when the artificial tooth 200 is attached to the denture base 100.

Of course, as shown in FIG. 7A, the recessed portion 160 described above is not necessarily provided in the basal surface 130 of the socket 120 of the denture base 100, and the projecting portion 240 described above is not necessarily provided in the basal surface 230 of the artificial tooth 200.

### Second Embodiment

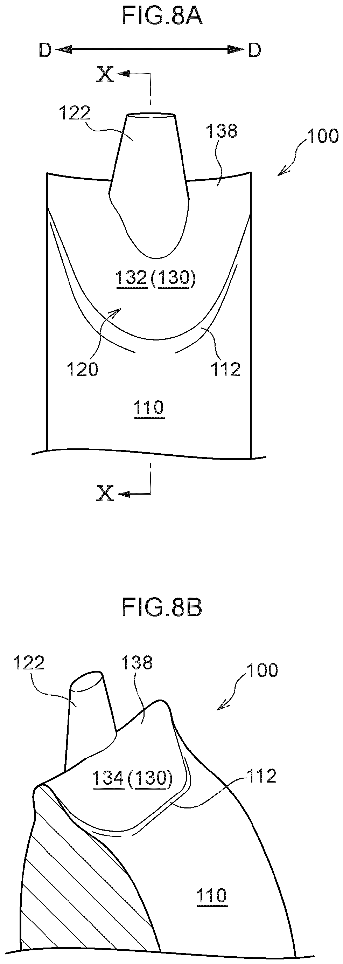

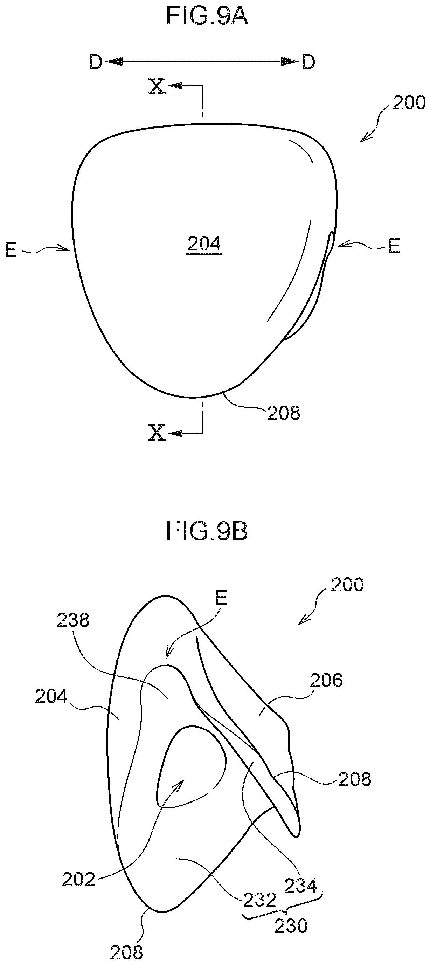

The denture 300 of a second embodiment is the same in terms of its configuration, material, and method of manufacture as the denture 300 of the first embodiment except that, as shown in FIG. 8A and FIG. 8B, a protruding portion 122 projects from the socket apex portion 138 of the basal surface 130 of the socket 120 of the denture base 100 and, as shown in FIG. 9A and FIG. 9B, a recessed portion 202 corresponding to the protruding portion 122 is provided in the basal surface apex portion 238 of the basal surface 230 of the artificial tooth 200.

When attaching the artificial tooth 200 to the denture base 100, the protruding portion 122 of the denture base 100 is fitted into the recessed portion 202 of the artificial tooth 200 and, as in the first embodiment, the basal surface 130 of the socket 120 and the basal surface 230 of the artificial tooth 200 are adhered to each other.

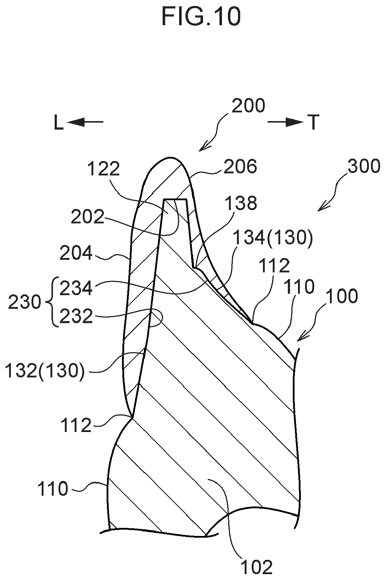

In this denture 300, the protruding portion 122 of the denture base 100 mates with the recessed portion 202 of the artificial tooth 200 as shown in the sectional view of FIG. 10. Due to this mating, the fixing degree of the artificial tooth 200 with respect to the denture base 100 is enhanced. Other points are the same as those of the denture 300 of the first embodiment.

### Third Embodiment

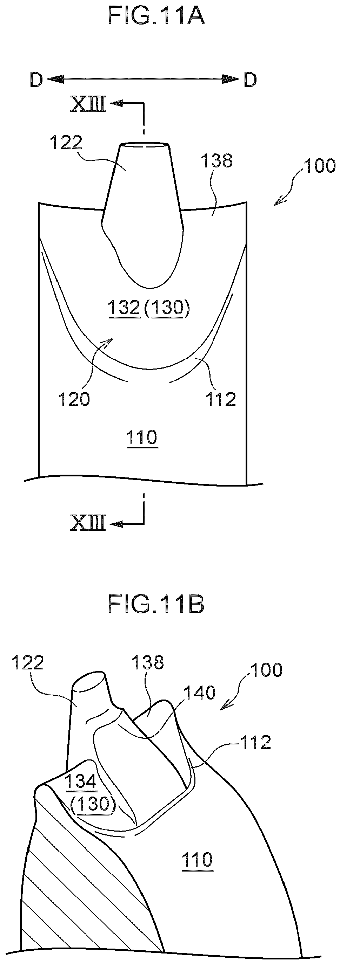

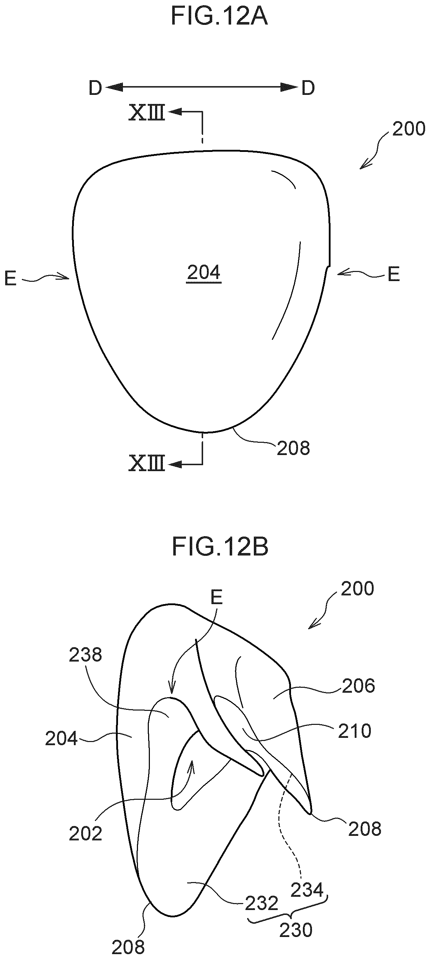

The denture 300 of a third embodiment is the same as that of the second embodiment in that, as shown in FIG. 11A and FIG. 11B, the protruding portion 122 projects from the socket apex portion 138 of the basal surface 130 of the socket 120 of the denture base 100 and, as shown in FIG. 12A and FIG. 12B, the recessed portion 202 corresponding to the protruding portion 122 is provided in the basal surface apex portion 238 of the basal surface 230 of the artificial tooth 200. In addition, as shown in FIG. 12B, a cutout portion 210 is provided in the center portion of the lingual-side surface 206. Moreover, as shown in FIG. 11B, a raised portion 140 that mates with the cutout portion 210 is formed in the basal surface 134 on the lingual surface side of the denture base 100. Other than these points, the configuration, material, and method of manufacture are the same as those of the denture 300 of the first embodiment.

When attaching the artificial tooth 200 to the denture base 100, the protruding portion 122 of the denture base 100 is fitted into the recessed portion 202 of the artificial tooth 200, the raised portion 140 of the artificial tooth 100 is simultaneously fitted into the cutout portion 210 of the artificial tooth 200, and, as in the first embodiment, the basal surface 130 of the socket 120 and the basal surface 230 of the artificial tooth 200 are adhered to each other.

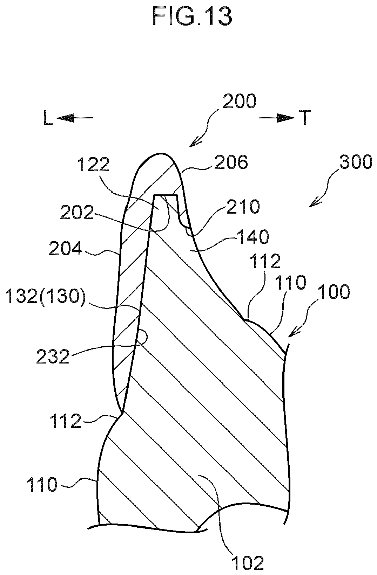

In this denture 300, as shown in the sectional view of FIG. 13, the protruding portion 122 of the denture base 100 mates with the recessed portion 202 of the artificial tooth 200, and the raised portion 140 of the denture base 100 mates with the cutout portion 210 of the artificial tooth 200. Due to this mating, the fixing degree of the artificial tooth 200 with respect to the denture base 100 is further enhanced. Other points are the same as those of the denture 300 of the first embodiment.

### Fourth Embodiment

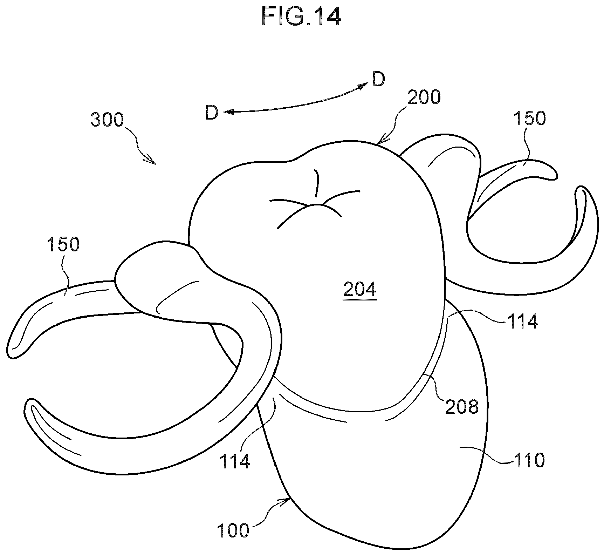

The denture 300 pertaining to a fourth embodiment is a partial denture as shown in FIG. 14. In this denture 300 also, as in the first embodiment, the artificial tooth 200 is attached to a socket (not shown) of the denture base 100. In this state, the lower end edge 208 of the labial-side surface 204 (and that of the lingual-side surface not shown in the drawing) of the artificial tooth 200 is visible from the outside in a state in which it is flush with the gingival area 110. Clasps 150 for allowing the denture 300 to clasp onto adjacent natural teeth are provided on both ends of the artificial tooth 200 along the tooth row.

### Industrial Applicability

The present invention is applicable to a denture base, an artificial tooth, and a denture comprising a combination of these.

## Claims

1. An artificial tooth (200) comprising:
a basal surface (230), which is to be adhered to a socket (120) of a denture base (100), having a valley-shaped basal surface apex portion (238) interconnecting both ends of the artificial tooth (200) along a tooth row and is configured by a surface that is concave overall when an occlusal surface of the artificial tooth (200) is facing upward; and
each of a labial-side surface (204) and a lingual-side surface (206) being formed as a continuous surface whose lower end edge (208) is visible even after the artificial tooth (200) is attached to the socket (120).

2. The artificial tooth (200) according to claim 1, wherein the basal surface (230) at a labial surface side of the basal surface apex portion (238) is formed in a concave shape that slopes downward toward the labial side.

3. The artificial tooth (200) according to claim 2, wherein the basal surface (230) at a lingual surface side of the basal surface apex portion (238) is also formed in a concave shape that slopes downward toward the lingual side.

4. The artificial tooth (200) according to claim 3, further comprising a recessed portion (202) in a central portion of the basal surface apex portion (238).

5. The artificial tooth (200) according to claim 1, wherein the basal surface (230) is matable with a socket (120) of a denture base (100) that comprises:
a base portion (102);
a socket (120) that is demarcated by a step portion (112) from a gingival area (110) of the base portion (102) and to which an artificial tooth (200) is to be attached; and
interdental papilla areas (114) of the gingival area (110), which are positioned at both ends of the socket (120) along a tooth row and which correspond to interdental papillae between adjacent teeth,
wherein, in a state in which the socket (120) is facing upward:
a basal surface (130) of the socket (120) has a ridge-shaped socket apex portion (138) interconnecting the interdental papilla areas (114) at both ends and is configured by a surface that is convex overall,
a peripheral area (136) of the basal surface (130) is in mutually continuous abutment with the step portion (112), and
the socket apex portion (138) is positioned substantially as high as, or higher than, apex portions (116) of the interdental papilla areas (114) that are seen from a labial side in a state in which the artificial tooth (200) is attached to the socket (120).

6. The artificial tooth (200) according to any one of claim 1 to claim 5, wherein the basal surface apex portion (238) is visible from a lateral direction of the artificial tooth (200).
